# EUROPEAN PATENT APPLICATION

(11) **EP 3 493 034 A1**
(43) Date of publication of application: **05.06.2019**
(21) Application number: 16910023.7
(22) Date of filing: 27.07.2016
(51) Int. Cl.: G06F 3/041

(54) **DISPLAY INTERFACE CONTROL METHOD AND DEVICE FOR MISOPERATION PREVENTION, AND TERMINAL**

(71) Applicant: Shenzhen Royole Technologies Co., Ltd., Shenzhen, Guangdong 518172 (CN)
(72) Inventor: XIA, Xinyuan, Shenzhen Guangdong 518052 (CN)
(74) Representative: Hamer, Christopher K.
(86) International application number: PCT/CN2016/091838
(87) International publication number: WO 2018/018442

(57) **Abstract**

A display interface control method and device for preventing misoperation, and a terminal, includes: measuring a bending angle between a first display portion and a second display portion of a touch display screen (101), the second display portion being flexibly connected to the first display portion by a bendable display portion, and the second display portion being operable to be folded or unfolded with respect to the first display portion; determining whether the bending angle is larger than a preset angle (102); and controlling the touch display screen to disable touch functions of the bendable display portion and the second display portion (103), if the bending angle is larger than the preset angle. The display interface control method for preventing misoperation can effectively prevent misoperation when the terminal is folded.

## Description

### TECHNICAL FIELD

The present disclosure relates to the technical field of flexible display, and more particularly relates to a display interface control method for preventing misoperation, a device and a terminal.

### BACKGROUND

With gradual maturity of flexible display technology, it provides a wider design space for portable user terminals such as mobile phones, smart watches, tablet computers, and so on. By employing a flexible display screen, designs of a curved display screen, a foldable display screen, and the like, can be realized on the above-mentioned user terminals, thereby taking into account the portability of the user terminal while achieving a larger display area. However, for a user terminal employing a foldable display screen, when the display screen is in a folded state, the display screen has a bent portion located at a lateral side of the terminal and a back portion located at a back of the terminal. If normal display and touch functions of the bent portion and the back portion are kept active, it is inevitable to touch the side and back positions of the terminal when user holds the terminal, which may easily cause misoperations to the terminal and increase the power consumption of the terminal.

### SUMMARY

Embodiments of the present disclosure provides a display interface control method for preventing misoperation, a device and a terminal, in order to solve a problem in related art that misoperations may easily occur when a touch display screen is in a folded state, thereby improving user operation experience and reducing power consumption of the terminal.

A display interface control method for preventing misoperation, includes: measuring a bending angle between a first display portion and a second display portion of a touch display screen, the second display portion being flexibly connected to the first display portion by a bendable display portion, and the second display portion being operable to be folded or unfolded with respect to the first display portion; determining whether the bending angle is larger than a preset angle; and controlling the touch display screen to disable touch functions of the bendable display portion and the second display portion, based on a determination that the bending angle is larger than the preset angle.

In an embodiment, the action of measuring a bending angle between the first display portion and the second display portion of the touch display screen includes: measuring a first angle of the first display portion with respect to a reference display plane, the reference display plane being a plane where the touch display screen is in when the touch display screen is in an unfolded state; measuring a second angle of the second display portion with respect to the reference display plane; and calculating the bending angle between the first display portion and the second display portion according to the first angle and the second angle.

In an embodiment, the bending angle between the first display portion and the second display portion is equal to a sum of the first angle and the second angle.

In an embodiment, the action of measuring a bending angle between the first display portion and the second display portion of the touch display screen includes: measuring an included angle between the first display portion and the second display portion; and calculating the bending angle between the first display portion and the second display portion according to the included angle.

In an embodiment, the bending angle between the first display portion and the second display portion is equal to 180 degrees minus the included angle between the first display portion and the second display portion.

In an embodiment, the method further includes: controlling content on the bendable display portion to gradually vary from one side where the bendable display portion is connected to the first display portion towards another side where the bendable display portion is connected to the second display portion, based on a determination that the bending angle is larger than the preset angle.

A display interface control device for preventing misoperation, includes an angle measurement unit, an angle determination unit, and a touch management unit. The angle measurement unit is configured to measure a bending angle between a first display portion and a second display portion of a touch display screen. The second display portion is flexibly connected to the first display portion by a bendable display portion, and the second display portion is operable to be folded or unfolded with respect to the first display portion. The angle determination unit is configured to determine whether the bending angle is larger than a preset angle. The touch management unit is configured to control the touch display screen to disable touch functions of the bendable display portion and the second display portion, when the bending angle is larger than the preset angle.

In an embodiment, the measurement unit includes a first measurement sub-unit, a second measurement sub-unit, and an angle calculation sub-unit. The first measurement sub-unit is configured to measure a first angle of the first display portion with respect to a reference display plane. The reference display plane is a plane where the touch display screen is in when the touch display screen is in an unfolded state. The second measurement sub-unit is configured to measure a second angle of the second display portion with respect to the reference display plane. The angle calculation sub-unit is configured to calculate the bending angle between the first display portion and the second display portion according to the first angle and the second angle.

In an embodiment, the measurement unit includes an included angle measurement sub-unit and an angle calculation sub-unit. The included angle measurement sub-unit is configured to measure an included angle between the first display portion and the second display portion. The angle calculation sub-unit is configured to calculate the bending angle between the first display portion and the second display portion according to the included angle.

In an embodiment, the device further includes a display management unit. The display management unit is configured to control content on the bendable display portion to gradually vary from one side where the bendable display portion is connected to the first display portion towards another side where the bendable display portion is connected to the second display portion, when the bending angle is larger than the preset angle.

A terminal includes a touch display screen, a processor, and at least one angle sensor. The touch display screen includes a first display portion, a second display portion, and a bendable display portion. The second display portion is flexibly connected to the first display portion by the bendable display portion, and the second display portion is operable to be folded or unfolded with respect to the first display portion. The processor is electrically coupled to the at least one angle sensor and the touch display screen. The at least one angle sensor is configured to measure a bending angle between the first display portion and the second display portion. The processor is configured to determine whether the bending angle is larger than a preset angle, and control the touch display screen to disable touch functions of the bendable display portion and the second display portion based on a determination that the bending angle is larger than the preset angle.

In an embodiment, the terminal further includes a first angle sensor and a second angle sensor. The first angle sensor is arranged on one side of the terminal corresponding to the first display portion, and configured to measure a first angle of the first display portion with respect to a reference display plane. The reference display plane is a plane where the touch display screen is in when the touch display screen is in an unfolded state. The second angle sensor is arranged on one side of the terminal corresponding to the second display portion, and configured to measure a second angle of the second display portion with respect to the reference display plane. The processor is further configured to calculate the bending angle between the first display portion and the second display portion according to the first angle and the second angle.

In an embodiment, the angle sensor is arranged on one side of the terminal corresponding to one of the first display portion and the second display portion, and configured to measure an included angle between the first display portion and the second display portion. The processor is further configured to calculate the bending angle between the first display portion and the second display portion according to the included angle.

In an embodiment, the processor is further configured to control content on the bendable display portion to gradually vary from one side where the bendable display portion is connected to the first display portion towards another side where the bendable display portion is connected to the second display portion, when the bending angle is larger than the preset angle.

According to the display interface control method for preventing misoperation, the bending angle between the first display portion and the second display portion of the touch display screen is measured. When the bending angle is larger than the preset angle, the touch display screen is controlled to disable the touch functions of the bendable display portion and the second display portion. Therefore, it is possible to effectively prevent the misoperations resulted from contact between the user's hand and the bendable display portion and the second display portion when the touch display screen is in a folded state, so as to ensue that the terminal can be normally held and operated when the touch display screen is in the folded state, thereby improving the user experience and reducing the power consumption of the terminal.

### BRIEF DESCRIPTION OF THE DRAWINGS

To clearly illustrate the technical solutions in embodiments of the present disclosure, the following descriptions will briefly illustrate the accompanying drawings described in the embodiments.
FIG. 1 is a first schematic flowchart of a display interface control method for preventing misoperation according to an embodiment of the present disclosure.
FIG. 2 is a schematic diagram of a first application scenario of the display interface control method for preventing misoperation according to an embodiment of the present disclosure.
FIG. 3 is a schematic diagram of a second application scenario of the display interface control method for preventing misoperation according to an embodiment of the present disclosure.
FIG. 4 is a second schematic flowchart of a display interface control method for preventing misoperation according to an embodiment of the present disclosure.
FIG. 5 is a schematic diagram of a third application scenario of the display interface control method for preventing misoperation according to an embodiment of the present disclosure.
FIG. 6 is a third schematic flowchart of a display interface control method for preventing misoperation according to an embodiment of the present disclosure.
FIG. 7 is a first schematic structural diagram of a display interface control device for preventing misoperation according to an embodiment of the present disclosure.
FIG. 8 is a second schematic structural diagram of a display interface control device for preventing misoperation according to an embodiment of the present disclosure.
FIG. 9 is a first schematic structural diagram of a terminal according to an embodiment of the present disclosure.
FIG. 10 is a second schematic structural diagram of a terminal according to an embodiment of the present disclosure.

### DETAILED DESCRIPTION OF ILLUSTRATED EMBODIMENTS

The technical solutions of embodiments of the present disclosure will be described clearly and completely in the following in combination with the accompanying drawings of the embodiments of the present disclosure. Obviously, the described embodiments are merely a part of embodiments of the present disclosure, but not all of the embodiments. All other embodiments obtained by those skilled in the art without creative efforts based on the embodiments of the present disclosure shall fall within the protection scope of the present disclosure.

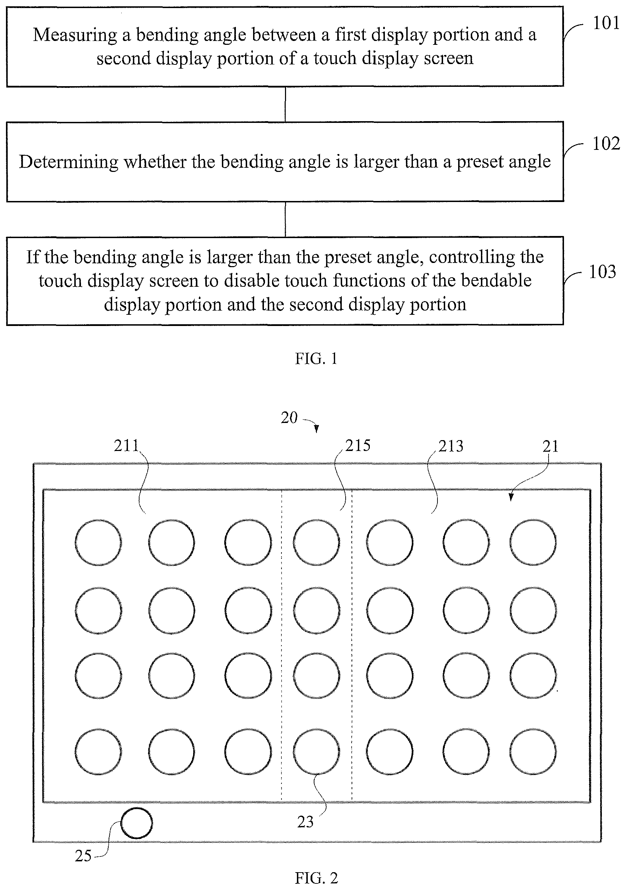

Referring to FIG. 1, a display interface control method for preventing misoperation is provided according to an embodiment of the present disclosure. The control method includes the flowing actions.

At block 101, a bending angle between a first display portion and a second display portion of a touch display screen is measured. The second display portion is flexibly connected to the first display portion by a bendable display portion, and the second display portion is operable to be folded or unfolded with respect to the first display portion.

At block 102, whether the bending angle is larger than a preset angle is determined.

At block 103, the touch display screen is controlled to disable touch functions of the bendable display portion and the second display portion, if the bending angle is larger than the preset angle.

FIG. 2 is a schematic diagram of a first application scenario of the display interface control method for preventing misoperation according to an embodiment of the present disclosure. A reference number "20" indicates a foldable terminal, such as a mobile phone, a tablet computer, and the like. A reference number "21" indicates a touch display screen of the terminal. The touch display screen 21 includes a first display portion 211, a second display portion 213 and a bendable display portion 215. The second display portion 213 is flexibly connected to the first display portion 211 by the bendable display portion 215, and the second display portion 213 is operable to be folded or unfolded with respect to the first display portion 211. A reference number "23" indicates contents displayed on the touch display screen 21, for example, the reference number "23" may indicate application icons. A reference number "25" indicates a primary key of the terminal, such as a HOME button having a fingerprint recognition function. FIG. 2 illustrates a state of the terminal 20 in which the second display portion 213 is unfolded with respect to the first display portion 211. When the touch display screen 21 is unfolded, the first display portion 211, the second display portion 213, and the bendable display portion 215 are in the same display plane. It can be understood that the bendable display portion 215 is a flexible touch display screen, and the first display portion 211 and the second display portion 213 each may be a flexible touch display screen or a rigid touch display screen, thereby enabling a flexible connection between the second display portion 213 and the first display portion 211, and the second display portion 213 may be operable to be folded or unfolded with respect to the first display portion 211.

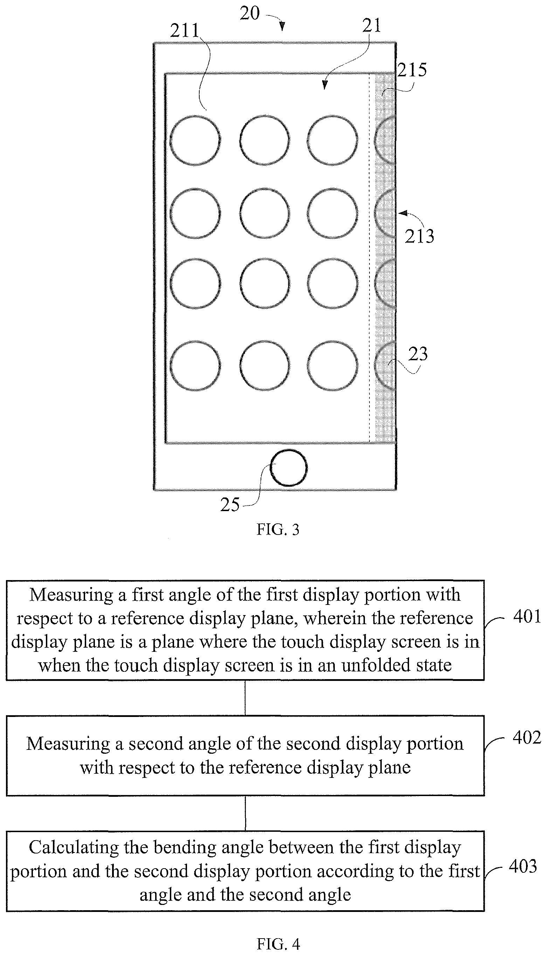

FIG. 3 is a schematic diagram of a second application scenario of the display interface control method for preventing misoperation according to an embodiment of the present disclosure. In such application scenario, the second display portion 213 is in a folded state with respect to the first display portion 211. A surface of the terminal 20 facing away from the first display portion 211 and a surface of the terminal 20 facing away from the second display portion 213 are in contact with each other, that is, the second display portion 213 and the first display portion 211 are disposed opposite to each other. At the same time, the bendable display portion 215 forms one lateral side of the terminal 20 when the terminal 20 is in the folded state. It can be understood that, when the terminal 20 is in the folded state, if the user operate the terminal 20 during holding the terminal 20, the second display portion 213 and the bendable display portion 215 inevitably come into contact with the user's finger, and misoperations may be made to the contents displayed on the second display portion 213 and the bendable display portion 215. In the embodiment, the bending angle between the first display portion 211 and the second display portion 213 is measured, and when bending angle is larger than a preset angle (for example, 30 degree), the touch display screen 21 is controlled to disable the touch functions of the bendable display portion 215 and the second display portion 213. Therefore, the misoperations caused by the contact between the user's finger and the second display portion 213 and the bendable display portion 215 can be effectively prevented when the terminal 20 is used in the folded state, thereby ensuring normal holding and operation of the terminal 20 when the terminal 20 is in the folded state, improving the user experience, and also reducing power consumption of the terminal 20.

Referring to FIG. 4, in an embodiment, the bending angle between the first display portion and the second display portion of the touch display screen is measured as follows.

At block 401, a first angle of the first display portion with respect to a reference display plane is measured. The reference display plane is a plane where the touch display screen is in when the touch display screen is in the unfolded state.

At block 402, a second angle of the second display portion with respect to the reference display plane is measured.

At block 403, the bending angle between the first display portion and the second display portion is calculated according to the first angle and the second angle.

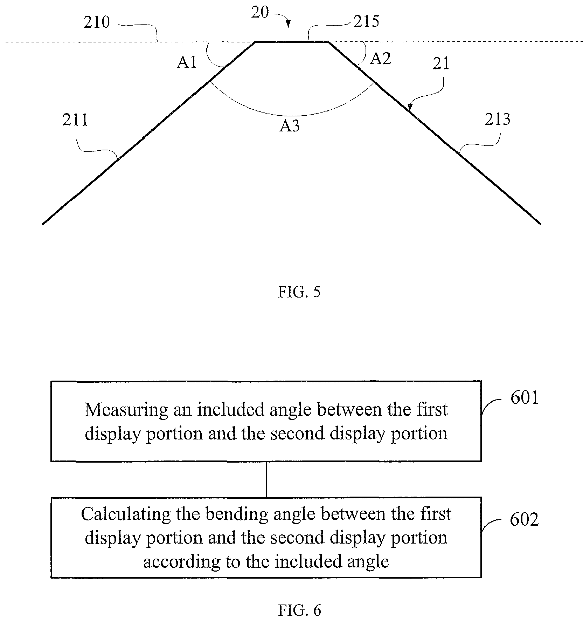

FIG. 5 is a schematic diagram of a third application scenario of the display interface control method for preventing misoperation according to an embodiment of the present disclosure. In such application scenario, the touch display screen 21 of the terminal 20 is in an intermediate state between the unfolded state and the folded state. A reference number "210" indicates a plane where the touch display screen 21 is in when the touch display screen 21 is in the unfolded state, that is, the reference display plane. A reference number "A1" indicates the first angle formed between the first display portion 211 and the reference display plane 210. A reference number "A2" indicates the second angle formed between the second display portion 213 and the reference display plane 210. In the embodiment, the bending angle between the first display portion 211 and the second display portion 213 is equal to a sum of the first angle A1 and the second angle A2. Assuming that the preset angle is 30 degrees, when the sum of the first angle A1 and the second angle A2 is larger than 30 degrees, it is determined that the terminal 20 is to be switched from the unfolded state to the folded state, thereby controlling the touch display screen 21 to disable the touch functions of the second display portion 213 and the bendable display portion 215, to prevent the contents displayed on the second display portion 213 and the bendable display portion 215 from being erroneously operated in the folded state.

Referring to FIG. 6, in an embodiment, the bending angle between the first display portion and the second display portion of the touch display screen is measured as follows.

At block 601, an included angle between the first display portion and the second display portion is measured.

At block 602, the bending angle between the first display portion and the second display portion is calculated according to the included angle.

Referring to FIG. 5 again, a reference number "A3" indicates the included angle between the first display portion 211 and the second display portion 213. Since a sum of the angle A3, the first angle A1 and the second angle A2 is 180 degrees, therefore, the bending angle between the first display portion 211 and the second display portion 213 can be calculated based on the included angle A3 by measuring the value of the included angle A3. In the embodiment, the bending angle between the first display portion 211 and the second display portion 213 is equal to 180 degrees minus the included angle A3 between the first display portion 211 and the second display portion 213. It can be understood that, in an optional embodiment, the touch functions of the second display portion 213 and the bendable display portion 215 may be controlled by determining whether the included angle A3 between the first display portion 211 and the second display portion 213 is less than a preset angle. For example, when the included angle A3 between the first display portion 211 and the second display portion 213 is less than 150 degrees, it is determined that the terminal 20 is to be switched from the unfolded state to the folded state, then the touch display screen 21 can be controlled to disable the touch functions of the second display portion 213 and the bendable display portion 215, thereby preventing the contents displayed on the second display portion 213 and the bendable display portion 215 from being erroneously operated in the folded state.

In an embodiment, the method further includes the following actions.

Content displayed on the bendable display portion is control to gradually vary from one side where the bendable display portion is connected to the first display portion towards another side where the bendable display portion is connected to the second display portion, if the bending angle is larger than the preset angle.

Referring to FIG. 3 again, when the touch display screen 21 of the terminal 20 is in the folded state, in order to prompt the user that besides the content currently displayed on the first display portion 211, some content is also displayed on the second display portion 213 and the bendable display portion 215. Then, when the bending angle is larger than the preset angle, as illustrated in the shaded portion of FIG. 3, the content displayed on the bendable display portion 215 is controlled to gradually vary from one side where the bendable display portion 215 is connected to the first display portion 211 towards another side where the bendable display portion 215 is connected to the second display portion 213, thereby prompting the user that some content is present on the bendable display portion 215 and the second display portion 213.

It can be understood that, when the touch display screen 21 of the terminal 20 is in the folded state, since the touch functions of the second display portion 213 and the bendable display portion 215 are disabled, in order to ensure that the contents (for example, the application icon 23) displayed on the second display portion 213 and the bendable display portion 215 can be normally operated, the content of the bendable display portion 215 and the second display portion 213 can be moved to and displayed on the first display portion 211 by receiving touch instructions (for example, sliding to the left) input in the first display portion 211 by the user, so that the user can operate the contents through the first display portion 211.

It can be understood that, in order to reduce the power consumption of the terminal 20, when the touch display screen 21 is in the folded state, the content displayed on the bendable display portion 215 can be gradually varied under control, for example, the brightness is gradually decreased from one side where the bendable display portion 215 is connected to the first display portion 211 towards another side where the bendable display portion 215 is connected to the second display portion 213. At the same time, the display function of the second display portion 213 can also be disabled. It can be understood that no display of the second display portion 213 will not affect the user to call up the content originally displayed on the second display portion 213 by sliding on the first display portion 211 towards left.

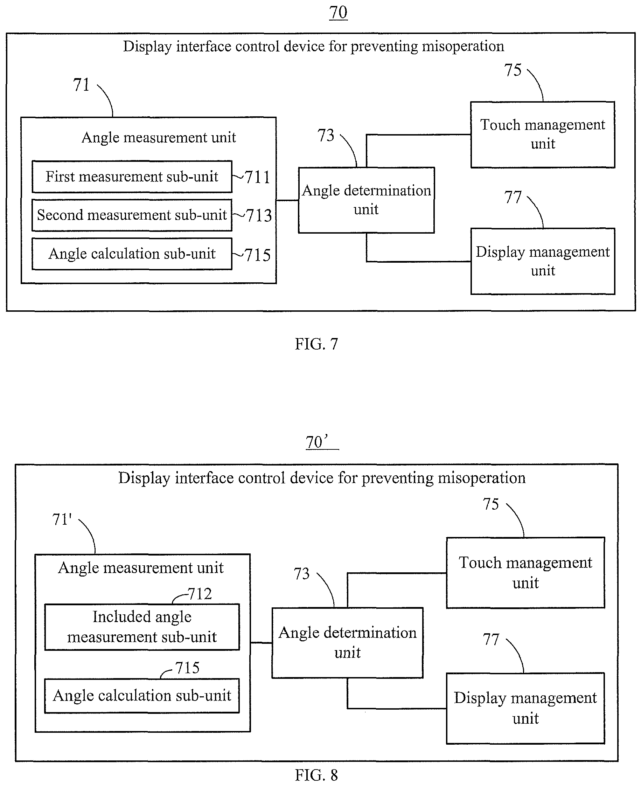

Referring to FIG. 7, a display interface control device 70 for preventing misoperation is provided according to an embodiment of the present disclosure. The control device includes an angle measurement unit 71, an angle determination unit 73, and a touch management unit 75.

The angle measurement unit 71 is configured to measure a bending angle between a first display portion and a second display portion of a touch display screen. The second display portion is flexibly connected to the first display portion by a bendable display portion, and the second display portion is operable to be folded or unfolded with respect to the first display portion.

The angle determination unit 73 is configured to determine whether the bending angle is larger than a preset angle.

The touch management unit 75 is configured to control the touch display screen to disable touch functions of the bendable display portion and the second display portion, when the bending angle is larger than the preset angle.

In an embodiment, the angle measurement unit 71 includes a first measurement sub-unit 711, a second measurement sub-unit 713, and an angle calculation sub-unit 715.

The first measurement sub-unit 711 is configured to measure a first angle of the first display portion with respect to a reference display plane. The reference display plane is a plane where the touch display screen is in when the touch display screen is in the unfolded state.

The second measurement sub-unit 713 is configured to measure a second angle of the second display portion with respect to the reference display plane.

The angle calculation sub-unit 715 is configured to calculate the bending angle between the first display portion and the second display portion according to the first angle and the second angle.

In the embodiment, the bending angle between the first display portion and the second display portion is equal to a sum of the first angle and the second angle.

In an embodiment, the device 70 further includes a display management unit 77. The display management unit 77 is configured to control the content on the bendable display portion to gradually vary from one side where the bendable display portion is connected to the first display portion towards another side where the bendable display portion is connected to the second display portion, when the bending angle is larger than the preset angle.

Referring to FIG. 8, a display interface control device 70' for preventing misoperation is provided according to an embodiment of the present disclosure. Compared to the display interface control device 70 for preventing misoperation which is illustrated in FIG. 7, the difference is that a measurement unit 71' of the display interface control device 70' for preventing misoperation includes an included angle measurement sub-unit 712 and an angle calculation sub-unit 715.

The included angle measurement sub-unit 712 is configured to measure an included angle between the first display portion and the second display portion.

The angle calculation sub-unit 715 is configured to calculate the bending angle between the first display portion and the second display portion according to the included angle.

In the embodiment, the bending angle between the first display portion and the second display portion is equal to 180 degrees minus the included angle between the first display portion and the second display portion.

It can be understood that the functions and the specific implementations of the units of the display interface control device 70 and 70' for preventing misoperation can also refer to the related description described in the above embodiments illustrated in FIG. 1 to FIG. 6 of the present disclosure, and detail are not described herein again.

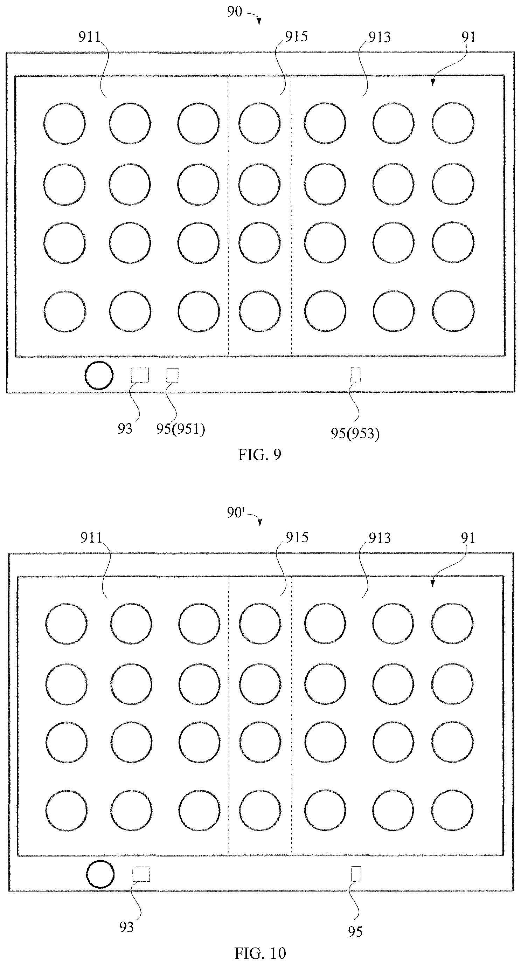

Referring to FIG. 9, a terminal 90 is provided according to an embodiment of the present disclosure. The terminal 90 includes a touch display screen 91. The touch display screen 91 includes a first display portion 911, a second display portion 913, and a bendable display portion 915. The second display portion 913 is flexibly connected to the first display portion 911 by the bendable display portion 915, and the second display portion 913 is operable to be folded or unfolded with respect to the first display portion 911.

The terminal 90 further includes a processor 93 and at least one angle sensor 95. The processor 93 is electrically coupled to the at least one angle sensor 95 and the touch display screen 91.

The at least one angle sensor 95 is configured to measure a bending angle between the first display portion 911 and the second display portion 913.

The processor 93 is configured to determine whether the bending angle is larger than a preset angle, and control the touch display screen 91 to disable touch functions of the bendable display portion 915 and the second display portion 913 if the bending angle is larger than the preset angle.

In an embodiment, the terminal 90 includes a first angle sensor 951 and a second angle sensor 953.

The first angle sensor 951 is arranged on one side of the terminal corresponding to the first display portion 911. The first angle sensor 951 is configured to measure a first angle of the first display portion 911 with respect to a reference display plane. The reference display plane is a plane where the touch display screen 91 is in when the touch display screen 91 is in the unfolded state.

The second angle sensor 953 is arranged on one side of the terminal corresponding to the second display portion 913. The second angle sensor 953 is configured to measure a second angle of the second display portion 913 with respect to the reference display plane.

The processor 93 is further configured to calculate the bending angle between the first display portion 911 and the second display portion 913 according to the first angle and the second angle.

In the embodiment, the bending angle between the first display portion 911 and the second display portion 913 is equal to a sum of the first angle and the second angle.

In an embodiment, the processor 93 is further configured to control the content on the bendable display portion 915 to gradually vary from one side where the bendable display portion 915 is connected to the first display portion 911 towards another side where the bendable display portion 915 is connected to the second display portion 913, when the bending angle is larger than the preset angle.

Referring to FIG. 10, a terminal 90' is provided according to an embodiment of the present disclosure. Compared to the terminal 90, the difference is that the terminal 90' includes an angle sensor 95.

The angle sensor 95 is arranged on one side of the terminal corresponding to one of the first display portion 911 and the second display portion 913. The angle sensor 95 is configured to measure an included angle between the first display portion 911 and the second display portion 913.

The processor 93 is further configured to calculate the bending angle between the first display portion 911 and the second display portion 913 according to the included angle.

In the embodiment, the bending angle between the first display portion 911 and the second display portion 913 is equal to 180 degrees minus the included angle between the first display portion 911 and the second display portion 913.

It can be understood that the functions and the specific implementations of the components of the terminal 90 and 90' can also refer to the related description described in the above embodiments illustrated in FIG. 1 to FIG. 6 of the present disclosure, and details are not described herein again.

According to the display interface control method for preventing misoperation, the bending angle between the first display portion and the second display portion of the touch display screen is measured. When the bending angle is larger than the preset angle, the touch display screen is controlled to disable the touch functions of the bendable display portion and the second display portion. Therefore, it is possible to effectively prevent the misoperations resulted from contact between the user's hand and the bendable display portion and the second display portion when the touch display screen is in the folded state, so as to ensue that the terminal can be normally held and operated when the touch display screen is in the folded state, thereby improving the user experience and reducing the power consumption of the terminal.

The description of the above is merely the preferred embodiment of the present disclosure, and the scope of the present disclosure is not limited thereto. Those skilled in the art can understand that implementation of all or part of the process of the above embodiments, equivalent changes made according to the claims of the present disclosure are still within the scope of the present disclosure.

## Claims

1. A display interface control method for preventing misoperation, comprising:
measuring a bending angle between a first display portion and a second display portion of a touch display screen, wherein the second display portion is flexibly connected to the first display portion by a bendable display portion, and the second display portion is operable to be folded or unfolded with respect to the first display portion;
determining whether the bending angle is larger than a preset angle; and
controlling the touch display screen to disable touch functions of the bendable display portion and the second display portion, based on a determination that the bending angle is larger than the preset angle.

2. The method of claim 1, wherein measuring the bending angle between the first display portion and the second display portion of the touch display screen, comprises:
measuring a first angle of the first display portion with respect to a reference display plane, wherein the reference display plane is a plane where the touch display screen is in when the touch display screen is in an unfolded state;
measuring a second angle of the second display portion with respect to the reference display plane; and
calculating the bending angle between the first display portion and the second display portion according to the first angle and the second angle.

3. The method of claim 2, wherein the bending angle between the first display portion and the second display portion is equal to a sum of the first angle and the second angle.

4. The method of claim 1, wherein measuring the bending angle between the first display portion and the second display portion of the touch display screen, comprises:
measuring an included angle between the first display portion and the second display portion; and
calculating the bending angle between the first display portion and the second display portion according to the included angle.

5. The method of claim 4, wherein the bending angle between the first display portion and the second display portion is equal to 180 degrees minus the included angle between the first display portion and the second display portion.

6. The method of any of claims 1 to 5, the method further comprising:
controlling content on the bendable display portion to gradually vary from one side where the bendable display portion is connected to the first display portion towards another side where the bendable display portion is connected to the second display portion, based on a determination that the bending angle is larger than the preset angle.

7. A display interface control device for preventing misoperation, comprising:
an angle measurement unit, configured to measure a bending angle between a first display portion and a second display portion of a touch display screen, wherein the second display portion is flexibly connected to the first display portion by a bendable display portion, and the second display portion is operable to be folded or unfolded with respect to the first display portion;
an angle determination unit, configured to determine whether the bending angle is larger than a preset angle; and
a touch management unit, configured to control the touch display screen to disable touch functions of the bendable display portion and the second display portion, when the bending angle is larger than the preset angle.

8. The device of claim 7, wherein the measurement unit comprises:
a first measurement sub-unit, configured to measure a first angle of the first display portion with respect to a reference display plane, wherein the reference display plane is a plane where the touch display screen is in when the touch display screen is in an unfolded state;
a second measurement sub-unit, configured to measure a second angle of the second display portion with respect to the reference display plane; and
an angle calculation sub-unit, configured to calculate the bending angle between the first display portion and the second display portion according to the first angle and the second angle.

9. The device of claim 7, wherein the measurement unit comprises:
an included angle measurement sub-unit, configured to measure an included angle between the first display portion and the second display portion; and
an angle calculation sub-unit, configured to calculate the bending angle between the first display portion and the second display portion according to the included angle.

10. The device of of any of claims 7 to 9, wherein the device further comprises:
a display management unit, configured to control content on the bendable display portion to gradually vary from one side where the bendable display portion is connected to the first display portion towards another side where the bendable display portion is connected to the second display portion, when the bending angle is larger than the preset angle.

11. A terminal, comprising:
a touch display screen, comprising a first display portion, a second display portion, and a bendable display portion, the second display portion being flexibly connected to the first display portion by the bendable display portion, and the second display portion being operable to be folded or unfolded with respect to the first display portion;
a processor and at least one angle sensor, the processor being electrically coupled to the at least one angle sensor and the touch display screen;
wherein the at least one angle sensor is configured to measure a bending angle between the first display portion and the second display portion;
the processor is configured to determine whether the bending angle is larger than a preset angle, and control the touch display screen to disable touch functions of the bendable display portion and the second display portion based on a determination that the bending angle is larger than the preset angle.

12. The terminal of claim 11, wherein the terminal further comprises a first angle sensor and a second angle sensor;
wherein the first angle sensor is arranged on one side of the terminal corresponding to the first display portion, and configured to measure a first angle of the first display portion with respect to a reference display plane, wherein the reference display plane is a plane where the touch display screen is in when the touch display screen is in an unfolded state;
the second angle sensor is arranged on one side of the terminal corresponding to the second display portion, and configured to measure a second angle of the second display portion with respect to the reference display plane;
the processor is further configured to calculate the bending angle between the first display portion and the second display portion according to the first angle and the second angle.

13. The terminal of claim 11, wherein the angle sensor is arranged on one side of the terminal corresponding to one of the first display portion and the second display portion, and configured to measure an included angle between the first display portion and the second display portion;
the processor is further configured to calculate the bending angle between the first display portion and the second display portion according to the included angle.

14. The terminal of any of claims 11 to 13, wherein the processor is further configured to control content on the bendable display portion to gradually vary from one side where the bendable display portion is connected to the first display portion towards another side where the bendable display portion is connected to the second display portion, when the bending angle is larger than the preset angle.
